# FASCICULE DE BREVET EUROPEEN

(11) **EP 2 695 363 B1**
(45) Date de publication et mention de la délivrance du brevet: **10.10.2018**
(21) Numéro de dépôt: 12722762.7
(22) Date de dépôt: 10.04.2012
(51) Int. Cl.: H04L 12/721, H04L 29/08

(54) **TECHNIQUE DE COMMUNICATION ENTRE DES RESEAUX DE DISTRIBUTION DE CONTENUS NUMERIQUES**
VERFAHREN ZUR KOMMUNIKATION ZWISCHEN NETZWERKEN ZUR VERTEILUNG DIGITALER INHALTE
TECHNIQUE FOR COMMUNICATION BETWEEN NETWORKS FOR DISTRIBUTING DIGITAL CONTENTS

(30) Priorité: 08.04.2011 FR 1153096
(43) Date de publication de la demande: 12.02.2014
(73) Titulaire: Orange, 75015 Paris (FR)
(72) Inventeur: VU DUONG, Thang, F-22300 Ploulec'h (FR); FIEAU, Frédéric, 75013 Paris (FR); FROMENTOUX, Gaël, F-22560 Pleumeur Bodou (FR)
(86) Numéro de dépôt international: PCT/FR2012/050773
(87) Numéro de publication internationale: WO 2012/136945

(56) Documents cités:
- WO-A1-02/071242
- WO-A1-03/039105
- WO-A2-03/069437
- US-A1- 2003 115 283
- US-A1- 2003 174 648
- US-A1- 2005 010 653
- US-B1- 7 260 598
- US-B1- 7 289 519
- PATHAN M ET AL: "Resource discovery and request-redirection for dynamic load sharing in multi-provider peering content delivery networks", JOURNAL OF NETWORK AND COMPUTER APPLICATIONS, ACADEMIC PRESS, NEW YORK, NY, US, vol. 32, no. 5, 1 septembre 2009 (2009-09-01), pages 976-990, XP026266877, ISSN: 1084-8045, DOI: 10.1016/J.JNCA.2009.03.003 [extrait le 2009-03-28]
- MUKADDIM PATHAN ET AL: "A utility model for peering of multi-provider content delivery services", LOCAL COMPUTER NETWORKS, 2009. LCN 2009. IEEE 34TH CONFERENCE ON, IEEE, PISCATAWAY, NJ, USA, 20 octobre 2009 (2009-10-20), pages 475-482, XP031581486, ISBN: 978-1-4244-4488-5

## Description

Un réseau de distribution de contenus CDN, pour « Content Delivery Network », est constitué de différents équipements reliés par l'intermédiaire d'un réseau de communication. Ces équipements coopèrent afin de mettre des contenus à disposition d'entités clientes. Certains de ces équipements, dits serveurs de livraison de contenus, sont en charge de la livraison effective des contenus aux entités clientes. Ces serveurs de livraison de contenus sont en général répartis dans le réseau de communication, afin d'optimiser les coûts de livraison. Dans un tel réseau de distribution, une requête d'une entité cliente est acheminée en fonction de différents critères vers un des équipements en charge de la livraison.

Un tel réseau de distribution peut être associé à un type d'accès particulier, par exemple mobile ou fixe, ou bien encore à un opérateur de réseau particulier.

Il existe un besoin d'interconnecter des réseaux de distribution de contenus.

Le document de travail de l'IETF, pour « Internet Engineering Task force », référencé « draft-bertrand-cdni-experiments-00 » et intitulé « Content Distribution Network Interconnection Experiments », présente des résultats de test d'interconnexion entre deux réseaux de distribution de contenus. Plus précisément, il est présenté un cas d'usage sur la base de messages conformes au protocole HTTP, pour « HyperText Transfer Protocol », dans lequel, sur réception par un premier réseau de distribution de contenu CDN A d'une requête émise par une entité cliente relative à un contenu C, non disponible au premier réseau CDN A, le premier réseau CDN A requiert le contenu C auprès d'un deuxième réseau de distribution CDN B et l'obtient en retour.

Lorsque le deuxième réseau CDN-B ne dispose pas du contenu C, il est prévu qu'il contacte un fournisseur de contenu CSP B afin de mettre ce contenu en cache.

Les documents suivants décrivent des procédés et des dispositifs de livraison de contenus localement indisponibles impliquant des réseaux de distribution de contenus interconnectés: US7289519 B1, US2005/010653 A1, US7260598 B1, WO-A-03/039105, US2003/174648 A1, US2003/115283 A1, WO-A-03/069437 ainsi que les articles de PATHAN M ET AL: "Resource discovery and request-redirection for dynamic load sharing in multi-provider peering content delivery networks",JOURNAL OF NETWORK AND COMPUTER APPLICATIONS, ACADEMIC PRESS, NEW YORK, NY, US, vol. 32, no. 5, 1 septembre 2009, pages 976-990,ISSN: 1084-8045, DOI: 10.1016/J.JNCA.2009.03.003 et de MUKADDIM PATHAN ET AL: "A utility model for peering of multi-provider content delivery services",LOCAL COMPUTER NETWORKS, 2009. LCN 2009. IEEE 34TH CONFERENCE ON, IEEE, PISCATAWAY, NJ, USA, 20 octobre 2009, pages 475-482, ISBN: 978-1-4244-4488-5. Aucun autre mécanisme n'est actuellement prévu.

Par ailleurs, les fabricants de réseaux de distribution de contenus ne proposent pas d'interface permettant aux réseaux de distribution de communiquer entre eux. Ainsi, il n'est en général pas possible de faire communiquer simplement deux réseaux de distribution de contenus.

Un des buts de l'invention est de remédier à des insuffisances/inconvénients de l'état de la technique et/ou d'y apporter des améliorations. L'invention est définie par la revendication de procédé 1, la revendication de dispositif 7, la revendication de serveur 9, la revendication de système 10, la revendication de programme 11 et la revendication de support informatique 12.

Selon un premier aspect, l'invention a pour objet un procédé de communication mis en oeuvre par un dispositif d'interfaçage d'un serveur d'un premier réseau de distribution de contenus numériques, ledit procédé comprenant les étapes suivantes :
- une étape de réception d'une demande d'ingestion d'un contenu émise par un équipement d'un deuxième réseau de distribution de contenus, en vue d'une mémorisation du contenu dans le deuxième réseau de distribution ;
- lorsque ledit premier réseau de distribution n'est pas apte à répondre à la demande, une étape d'envoi d'une requête à destination d'au moins un troisième réseau de distribution de contenus, requérant un transfert du contenu au deuxième réseau de distribution, le premier réseau de distribution délégant ledit transfert du contenu.

On entend par le terme « contenu numérique » tout type de données numériques correspondant à un contenu ou à un ensemble de contenus qui peut être transmis dans le réseau considéré sous la forme d'un flux de données. On peut notamment citer des données relatives à un document ou encore des données de type image ou de type son ou encore de type vidéo, ou de manière générale des données de type multimédia.

Ainsi, grâce à l'invention, il est possible de déléguer au troisième réseau de distribution de contenus le transfert ou la fourniture du contenu au deuxième réseau de distribution. Plus précisément, cette délégation est prise en charge par un serveur du troisième réseau de distribution. Le deuxième réseau de distribution de contenus va ainsi pouvoir obtenir le contenu à partir du troisième réseau de distribution, sans sollicitation de sa part vers le troisième réseau de distribution. De plus, ce transfert du contenu peut s'effectuer sans accord d'appairage entre les deuxième et troisième réseaux de distribution.

On constate, d'après l'état des lieux dressé dans le document de l'IETF cité précédemment, que l'interconnexion entre les réseaux de distribution est possible uniquement grâce à l'intervention d'un opérateur humain et se limite à l'interconnexion entre deux réseaux de distribution.

Le procédé de communication permet ainsi de mettre en oeuvre une interface permettant aux réseaux de distribution de contenus de communiquer entre eux, et notamment de solliciter d'autres réseaux de distribution pour répondre à une requête de fourniture ou demande d'ingestion d'un contenu à laquelle le premier réseau de distribution ne peut répondre. Le procédé de communication permet également de mettre en oeuvre une coopération entre une pluralité de réseaux de distribution grâce à la diffusion des demandes d'ingestion de contenu à d'autres réseaux de distribution. De plus, le mécanisme de délégation permet au troisième réseau de distribution de fournir directement le contenu au deuxième réseau de distribution.

Le procédé de communication permet également d'améliorer la qualité du service de distribution de contenus en augmentant la probabilité pour le réseau de distribution de contenus d'obtenir un contenu déjà demandé par les entités clientes ou susceptible d'être demandé par des entités clientes en raison de sa popularité.

Selon une caractéristique particulière, la demande d'ingestion émise par l'équipement du deuxième réseau de distribution est reçue par l'intermédiaire d'au moins un quatrième réseau de distribution, sous la forme d'une requête avec délégation.

Il est possible ainsi d'enchaîner les délégations pour encore augmenter la probabilité pour le réseau de distribution de contenus d'obtenir un contenu demandé.

Selon une autre caractéristique particulière, le procédé de communication comprend en outre :
- une étape de réception d'un accord de transfert du contenu en provenance du troisième réseau de distribution ;
- une étape d'envoi dudit accord à destination du deuxième réseau de distribution.

L'accord de fourniture suit ainsi le chemin inverse de celui suivi par la requête de fourniture du contenu. Ceci permet d'informer le deuxième réseau de distribution que le troisième réseau de distribution a pris en charge le traitement de la requête de fourniture.

Selon une autre caractéristique particulière, le procédé de communication comprend en outre, lorsque ledit premier réseau de distribution est apte à répondre à la demande :
- une étape de détermination d'un chemin reliant le premier réseau de distribution au deuxième réseau de distribution, le cas échéant par l'intermédiaire d'au moins un quatrième réseau de distribution avec lequel un appairage est établi ;
- une étape d'envoi du contenu à destination du deuxième réseau de distribution sur ledit chemin, le cas échéant par l'intermédiaire dudit au moins un quatrième réseau de distribution.

On entend par chemin une liste d'équipements ou noeuds appartenant respectivement à des réseaux de distribution et/ou une liste d'équipements ou noeuds dans le réseau de communication sous-jacent.

Ainsi, le contenu va quant à lui suivre un chemin indépendant de celui suivi par la requête de fourniture de contenu pour atteindre le réseau de distribution ayant requis le contenu.

Selon une autre caractéristique particulière, le procédé de communication comprend en outre une étape de réception d'informations relatives audit au moins un quatrième réseau de distribution et dans lequel lesdites informations sont prises en compte pour déterminer un chemin.

Il existe des solutions techniques permettant de déterminer un chemin optimal dans un réseau de distribution. Toutefois, seuls des critères liés au trafic dans le réseau de communication sous-jacent au réseau de distribution sont pris en compte. De plus, ces solutions ne sont pas transposables à l'interconnexion entre les réseaux de distribution. En effet, l'interconnexion nécessite de sélectionner des réseaux de distribution et/ou des équipements appartenant à ces derniers.

Le procédé de communication permet ainsi à chaque réseau de distribution de prendre en compte les informations reçues des différents réseaux de distribution pour déterminer le chemin optimal.

Les informations reçues sont par exemple relatives à la charge des équipements du réseau de distribution.

Plus généralement, chaque réseau de distribution peut définir ses propres critères qui vont être utilisés pour déterminer le chemin optimal.

Selon une autre caractéristique particulière, le procédé de communication comprend en outre :
- une étape de réception dudit contenu et du chemin associé en provenance du troisième réseau de distribution et à destination du deuxième réseau de distribution ;
- une étape d'envoi du contenu à destination du deuxième réseau de distribution sur ledit chemin par l'intermédiaire d'un des réseaux de distribution situé sur ledit chemin et avec lequel un appairage est établi.

Ceci permet au contenu d'être transmis de proche en proche le long du chemin et à destination du deuxième réseau de distribution.

Selon un deuxième aspect, l'invention concerne également un dispositif d'interfaçage destiné à être intégré dans un premier réseau de distribution de contenus numériques, agencé pour s'interfacer avec au moins un deuxième dispositif d'interfaçage d'un deuxième réseau de distribution de contenus, ledit dispositif comprenant :
- des moyens de réception, agencés pour recevoir une demande d'ingestion d'un contenu émise par un équipement d'un deuxième réseau de distribution de contenus, en vue d'une mémorisation du contenu dans le deuxième réseau de distribution ;
- des moyens d'envoi, agencés pour envoyer une requête à destination d'au moins un troisième réseau de distribution de contenus lorsque ledit premier réseau de distribution n'est pas apte à répondre à la demande, requérant un transfert du contenu au deuxième réseau de distribution, le premier réseau de distribution délégant ledit transfert dudit contenu.

Selon une caractéristique particulière, le dispositif d'interfaçage comprend en outre :
- des moyens de détermination d'un chemin, agencés pour déterminer un chemin reliant le premier réseau de distribution au deuxième réseau de distribution, le cas échéant par l'intermédiaire d'au moins un quatrième réseau de distribution avec lequel un appairage est établi ;
- des moyens d'envoi du contenu à destination du deuxième réseau de distribution sur ledit chemin, le cas échéant par l'intermédiaire dudit au moins un quatrième réseau de distribution.

Selon un troisième aspect, l'invention concerne en outre un serveur d'un réseau de distribution de contenus comprenant au moins un dispositif d'interfaçage tel que décrit précédemment.

Selon un quatrième aspect, l'invention concerne en outre un système de distribution de contenus, comprenant au moins deux dispositifs d'interfaçage tels que décrits précédemment appartenant respectivement à deux réseaux de distribution de contenus.

Selon un cinquième aspect, l'invention concerne un programme pour un dispositif d'interfaçage d'un réseau de distribution de contenus, comprenant des instructions de code de programme destinées à commander l'exécution des étapes du procédé de communication précédemment décrit, lorsque ledit programme est exécuté par ledit dispositif et un support d'enregistrement lisible par un dispositif d'interfaçage sur lequel est enregistré un programme pour un dispositif d'interfaçage.

L'invention sera mieux comprise à l'aide de la description suivante de modes de réalisation particuliers du procédé de l'invention, en référence aux dessins annexés sur lesquels :
- la figure 1 illustre une architecture générale adaptée pour la mise en oeuvre d'un procédé de communication entre réseaux de distribution de contenus numériques selon un mode de réalisation de la présente invention ;
- la figure 2 représente des étapes du procédé de communication selon un mode particulier de réalisation de l'invention ;
- la figure 3 illustre une mise en oeuvre d'un tel procédé dans un système de distribution de contenus numériques selon un mode de réalisation de la présente invention ;
- la figure 4 représente un dispositif d'interfaçage d'un réseau de distribution de contenus selon un mode de réalisation de l'invention.

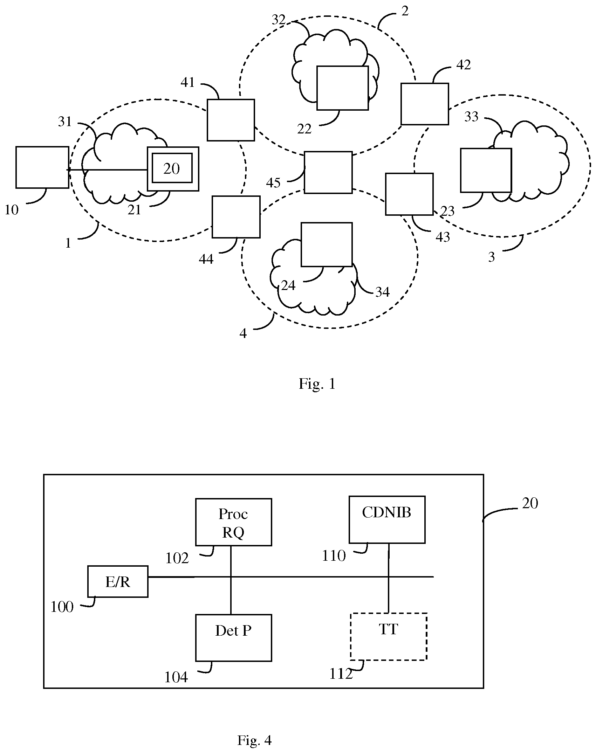

La figure 1 illustre une architecture générale adaptée pour la mise en oeuvre d'un procédé de communication entre réseaux de distribution de contenus selon un mode de réalisation de la présente invention. Quatre systèmes autonomes 1, 2, 3, 4 sont représentés sur la figure 1. En règle générale, un tel système autonome 1-4 correspond à un réseau de communication et est sous le contrôle d'un opérateur de ce réseau. Le premier système autonome 1 comprend un premier réseau de distribution de contenus 31, agencé pour recevoir des requêtes d'accès à des contenus en provenance d'entités clientes et pour leur fournir en retour les contenus demandés. Une seule entité cliente 10 est représentée sur la figure 1. Il est bien entendu qu'une pluralité d'entités clientes est susceptible de demander un contenu. Le premier réseau de distribution 31 comprend un sous réseau de service et un sous réseau de distribution. Le sous réseau de service comprend des serveurs, dont l'un 21 d'entre eux est représenté sur la figure 1, ces serveurs étant adaptés pour recevoir une requête de contenu numérique d'une entité cliente, pour vérifier si le contenu numérique requis est disponible et pour rediriger l'entité cliente vers un serveur de livraison de contenus du sous réseau de distribution. Le sous réseau de distribution comprend différents serveurs de livraison de contenus répartis géographiquement dans le système autonome 1. Par souci de simplification, ces serveurs ne sont pas représentés sur la figure 1. L'entité cliente 10 est adaptée pour requérir un contenu numérique auprès du sous réseau de service et pour le recevoir depuis un serveur de livraison de contenus du sous réseau de distribution.

Les deuxième, troisième et quatrième systèmes autonomes sont organisés de façon équivalente à celle décrite en relation avec le premier système autonome. Plus précisément, le deuxième système autonome 2 comprend un deuxième réseau de distribution de contenus 32, pour lequel un deuxième serveur 22 du sous réseau de service est représenté sur la figure 1. Le troisième système autonome 3 comprend un troisième réseau de distribution de contenus 33, pour lequel un troisième serveur 23 du sous réseau de service est représenté sur la figure 1. Le quatrième système autonome 4 comprend un quatrième réseau de distribution de contenus 34, pour lequel un quatrième serveur 24 du sous réseau de service est représenté sur la figure 1.

Des données relatives aux réseaux de distribution sont échangées entre les premier 1 et deuxième 2 systèmes autonomes par l'intermédiaire d'un premier équipement d'appairage 41, ou « peering point » en anglais, lorsque les opérateurs de ces deux systèmes autonomes ont établi un accord de raccordement de leurs réseaux de distribution. Il est bien entendu que des accords d'appairage entre les réseaux de communication sont susceptibles d'exister par ailleurs. Par la suite, on se restreint à l'appairage entre réseaux de distribution. Tel que représenté à la figure 1, les deuxième 2 et troisième 3 systèmes autonomes échangent des données par l'intermédiaire d'un deuxième équipement d'appairage 42 ; les troisième 3 et quatrième 4 systèmes autonomes échangent des données par l'intermédiaire d'un troisième équipement d'appairage 43 ; les quatrième 4 et premier 1 systèmes autonomes échangent des données par l'intermédiaire d'un quatrième équipement d'appairage 44 ; les deuxième 2 et quatrième 4 systèmes autonomes échangent des données par l'intermédiaire d'un cinquième équipement d'appairage 45. Aucun échange de données relatives aux réseaux de distribution n'est prévu entre les premier et troisième systèmes autonomes.

On rappelle ici que le terme « contenu numérique » désigne tout type de données numériques correspondant à un contenu ou à un ensemble de contenus qui peut être transmis dans le réseau considéré sous la forme d'un flux de données. On peut notamment citer des données relatives à un document ou encore des données de type image ou de type son ou encore de type vidéo, ou de manière générale des données de type multimédia.

On entend par la suite par le terme ingestion d'un contenu numérique la première mémorisation de ce contenu dans un réseau de distribution de contenus.

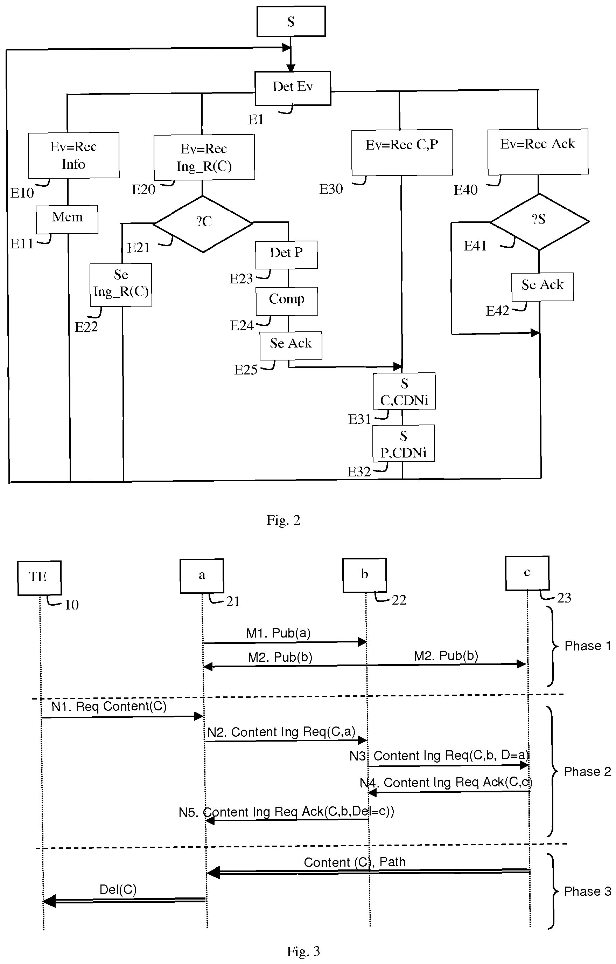

Le procédé de communication, tel qu'il est mis en oeuvre par un des serveurs 21, 22, 23, 24, va maintenant être décrit en relation avec la figure 2. On se place à titre d'exemple non limitatif au niveau du deuxième serveur 22 du deuxième réseau de distribution 32. Plus précisément, un dispositif d'interfaçage 20 du deuxième serveur est en charge de mettre en oeuvre les étapes du procédé de communication.

Dans une première étape E1, le deuxième serveur 22 est en attente de détection d'un événement.

A l'étape E10, le deuxième serveur 22 détecte que des informations relatives à l'un des autres réseaux de distribution ont été reçues. Un accord d'appairage est établi entre le deuxième réseau de distribution 32 et cet autre réseau de distribution. Dans l'exemple non limitatif de la figure 1, cet autre réseau de distribution peut correspondre aux premier 31, troisième 33 ou quatrième 34 réseaux de distribution.

Plus précisément, les informations reçues peuvent comprendre ;
- des informations relatives à une charge de cet autre réseau de distribution ;
- des catalogues de contenus disponibles dans cet autre réseau de distribution, avec le cas échéant une information relative à une popularité du contenu et/ou des droits de restriction d'usage du contenu ;
- ou bien encore des informations relatives à une charge d'appairage de l'équipement d'appairage entre le deuxième réseau de distribution de contenus et cet autre réseau de distribution.

Dans une étape E11, le deuxième serveur 22 mémorise dans une table 110 les informations reçues en association avec un identifiant de cet autre réseau de distribution.

Dans un mode de réalisation particulier, toujours au cours de cette étape E11, le deuxième serveur 22 détermine une topologie de l'ensemble des réseaux de distribution et la mémorise dans une table de topologie 112. Par topologie, on entend une cartographie des connexions établies entre les différents réseaux de distribution. Des informations plus précises relatives à un réseau de distribution peuvent également être mémorisées en association. Il s'agit par exemple des adresses dans le réseau de communication sous-jacent de points d'entrée du réseau de distribution, tels que des serveurs, des caches ou bien des contrôleurs de réseau de distribution. Il est ici souligné que ces équipements ne sont pas directement adressables par les entités clientes. Il peut s'agir également des adresses dans le réseau de communication sous-jacent des équipements d'appairage et de leurs états respectifs. Il peut encore s'agir des adresses dans le réseau de communication sous-jacent des équipements du réseau de distribution destinataires des livraisons de contenu. Il est également possible d'avoir différents niveaux d'informations entre les différents réseaux de distribution de contenus, par exemple en fonction des accords d'appairage établis.

Le procédé repasse ensuite à l'étape E1 en attente de détection d'un événement.

A l'étape E20, le deuxième serveur 22 détecte qu'une requête de fourniture d'un contenu C a été reçue en provenance d'un des autres réseaux de distribution. Cette requête de fourniture correspond à une demande d'ingestion du contenu C émise par un des réseaux de distribution. La demande d'ingestion a éventuellement été relayée par un autre réseau de distribution sous la forme d'une requête de fourniture ou de transfert avec délégation. Ce mode de fonctionnement du procédé est décrit ultérieurement en relation avec l'étape E22. Par la suite, le terme requête de fourniture est utilisé indifféremment pour indiquer une demande d'ingestion ou une requête avec délégation.

Dans une étape E21, consécutive à l'étape E20, le deuxième serveur 22 détermine s'il est apte à répondre à cette requête de fourniture. Il s'agit plus précisément de vérifier si le contenu est disponible dans le deuxième réseau de distribution 32. Des critères tels que le format des données formant le contenu peuvent également être pris en compte lors de cette étape E21. D'autres critères peuvent également être pris en compte, par exemple en identifiant les contenus de la façon décrite dans la demande de brevet publiée sous le numéro US 2007/0180468 A1 et intitulée « Universal Digital Code For Unique Content Identification ».

Lorsque le deuxième réseau de distribution n'est pas apte à répondre à la requête de fourniture du contenu, le deuxième serveur 22 met en oeuvre une étape de transfert E22 de cette requête. La requête de fourniture du contenu est transmise à destination d'un ou de plusieurs des autres réseaux de distribution de contenus. Il peut s'agir d'un dialogue point à point avec un des autres réseaux de diffusion ou bien encore d'une diffusion à l'ensemble des réseaux avec lesquels un appairage est établi. Dans un mode de réalisation particulier, le dialogue point à point peut être initié en fonction des informations mémorisées dans la table 112. Dans un autre mode de réalisation particulier, le deuxième serveur 22 peut également prendre en compte les catalogues de contenus mémorisés dans la table 110 en association avec l'identifiant du réseau de distribution pour sélectionner un des réseaux de distribution disposant du contenu recherché.

Une information de délégation par le deuxième réseau de distribution 32 est également transmise en association avec la requête de fourniture du contenu. Cette délégation permet à un des autres réseaux de distribution de fournir le contenu au réseau de distribution ayant émis la requête de fourniture initiale, c'est-à-dire la demande d'ingestion. Il est ici souligné que la requête de fourniture du contenu C peut déjà contenir une délégation d'un autre réseau de distribution, dans le cas où la requête a déjà été relayée par cet autre réseau de distribution. Ainsi, lorsque la requête de fourniture du contenu C atteint un réseau de distribution disposant du contenu, ce dernier est bien délégataire du premier réseau de distribution ayant relayé la requête.

Le procédé repasse ensuite à l'étape E1 en attente de détection d'un événement.

Lorsqu'à l'étape E21 il est vérifié que le deuxième réseau de distribution 32 est apte à répondre à la requête de fourniture du contenu C, c'est-à-dire que le deuxième réseau dispose du contenu C, le deuxième serveur 22 détermine dans des étapes E23 et E24 un chemin reliant le deuxième réseau de distribution 32 au réseau de distribution requérant l'ingestion du contenu C par l'intermédiaire, le cas échéant, d'un autre réseau de distribution.

A l'étape E23, le deuxième serveur 22 détermine un ensemble de chemins potentiels entre les deux réseaux de distribution concernés. Un chemin correspond à une liste d'équipements ou noeuds appartenant respectivement à des réseaux de distribution et/ou une liste d'équipements ou noeuds dans le réseau de communication sous-jacent. A chaque chemin déterminé est associé un critère de coût. Ce coût est déterminé en fonction des informations mémorisées dans la table 110, telles que les informations relatives à la charge des réseaux de distribution formant le chemin, les informations relatives à la charge des équipements d'appairage entre les réseaux de distribution formant le chemin.

Le coût peut également prendre en compte :
- des informations relatives aux coûts d'interconnexion entre les réseaux de distribution ;
- des informations relatives au contenu lui-même, telles qu'un type, une popularité, une origine, un coût, un débit associé au contenu des droits de restriction d'usage du contenu ;
- une information relative à un horaire ;
- une information relative à un type de réseau de communication sous-jacent au réseau de distribution.

Il est bien entendu que cette liste d'informations n'est pas exhaustive.

Il est ainsi possible d'optimiser la qualité de service en minimisant le temps de latence pendant la distribution du contenu, de diminuer les coûts d'interconnexion entre les réseaux de communication sous-jacents ou bien encore de minimiser un coût en ressources de livraison.

A l'étape E24, le deuxième serveur 22 détermine un chemin pour lequel le coût global prend la valeur la plus faible. Il est par exemple possible pour déterminer ce chemin d'utiliser des algorithmes tels que celui de Dijkstra ou bien encore celui décrit dans la demande de brevet publiée sous le numéro US7257628.

Une liste ordonnée de réseaux de distribution forme ainsi le chemin obtenu à l'issue de l'étape E24, du deuxième réseau de distribution vers le réseau de distribution requérant l'ingestion du contenu C. Plus précisément, on rappelle que cette liste ordonnée ou chemin correspond à une liste d'équipements ou noeuds appartenant respectivement à des réseaux de distribution et/ou une liste d'équipements ou noeuds dans le réseau de communication sous-jacent.

A l'étape E25, le deuxième serveur 22 envoie au réseau de distribution qui lui a transmis la requête de fourniture un accord pour la fourniture du contenu au réseau de distribution requérant l'ingestion du contenu, appelé par la suite accord de fourniture ou accord de transfert. La fourniture du contenu correspond au transfert du contenu vers le réseau de distribution ayant requis le contenu.

A l'étape E31, le deuxième serveur 22 détermine le réseau de distribution immédiatement situé sur le chemin à destination du réseau de distribution requérant le contenu. Le deuxième serveur 22 transmet alors le contenu C vers ce réseau de distribution déterminé. Plus précisément, le contenu C est transmis à destination de l'équipement du réseau de distribution déterminé. A l'étape E32, le deuxième serveur 22 transmet également le chemin suivant lequel le contenu C doit être acheminé. Plus précisément, les informations suivantes sont associées au contenu : un identifiant du contenu, un identifiant du réseau de distribution source, une liste ordonnée des réseaux de distribution par l'intermédiaire desquels transite le contenu, un identifiant du contenu, des métadonnées, une durée de mise en cache sur les équipements intermédiaires, une demande d'adaptation du contenu à un format donné, des droits de restriction d'usage, une popularité du contenu. Le contenu est par exemple identifié de la façon décrite dans la demande de brevet publiée sous le numéro US 2007/0180468 A1 et intitulée « Universal Digital Code For Unique Content Identification ». L'adaptation du contenu à un format donné peut être réalisée par le deuxième serveur 22 ou bien encore par un réseau de distribution par lequel le contenu va transiter. La popularité du contenu permet à des réseaux de distribution intermédiaires de mémoriser ce contenu. En effet, il peut être utile à un réseau de distribution intermédiaire de mémoriser un contenu populaire en vue d'une livraison ultérieure à ses propres entités clientes.

Dans une variante de réalisation, le chemin est transmis en association avec le contenu C et les étapes E31 et E32 sont ainsi confondues.

Le procédé repasse ensuite à l'étape E1 en attente de détection d'un événement.

A l'étape E30, le deuxième serveur 22 détecte qu'il reçoit le contenu C et un chemin associé. Le deuxième serveur 22 met alors en oeuvre les étapes E31 et E32, décrites précédemment, pour retransmettre le contenu C le long du chemin à destination du réseau de distribution requérant le contenu C.

Le procédé repasse ensuite à l'étape E1 en attente de détection d'un événement.

A l'étape E40, le deuxième serveur 22 détecte qu'il reçoit un accord de fourniture à destination du réseau de distribution requérant le contenu.

A l'étape E41, le deuxième serveur 22 détermine qu'il n'est pas à l'origine de la requête de fourniture du contenu C. Dans ce cas, le deuxième serveur 22 transfère dans une étape E42 l'accord de fourniture à destination du réseau de distribution requérant l'ingestion du contenu C.

Le procédé repasse ensuite à l'étape E1 en attente de détection d'un événement.

En parallèle, dans une étape non représentée, le deuxième serveur 22 transmet aux autres réseaux de distribution avec lesquels un appairage est établi les informations qui lui sont relatives. Dans un mode de réalisation particulier, le deuxième serveur 22 relaie également les informations relatives aux autres réseaux de distribution reçues à l'étape E10.

On note que la requête de fourniture peut être reçue directement du réseau de distribution requérant le contenu sous la forme d'une demande d'ingestion ou bien également relayée par d'autres réseaux de distribution. Il est possible de limiter le nombre de fois que la requête de fourniture du contenu est relayée afin de limiter les interactions aux réseaux de distribution situés dans une zone de taille fixe. De plus, des mécanismes d'évitement de boucle peuvent être mis en oeuvre.

On note également que l'accord de fourniture est transmis sur le chemin inverse de celui emprunté par la requête de fourniture vers le réseau de distribution requérant le contenu. Le contenu C va quant à lui emprunter un chemin présentant un coût minimum vers le réseau de distribution requérant l'ingestion du contenu, relayé le cas échéant par d'autres réseaux de distribution.

La mise en oeuvre du procédé de communication va maintenant être décrite dans un exemple particulier, en relation avec la figure 3.

Sur cette figure 3, le premier serveur 21 est identifié par a, le deuxième serveur 22 par b et le troisième serveur 23 par c.

Une première phase, notée Phase 1 sur la figure 3, correspond aux échanges d'informations entre les réseaux de distribution. Ainsi, si on se place au niveau du deuxième serveur 22, ce dernier reçoit à l'étape E10 un message M1 émis par le premier serveur 21, ce message M1 comprenant les informations relatives au premier réseau de distribution 31. Par ailleurs, le deuxième serveur 22 transmet vers les premier 21 et troisième 23 serveurs un message M2 comprenant les informations relatives au deuxième réseau de distribution 32.

Une deuxième phase, notée Phase 2 sur la figure 3, correspond aux échanges entre les différents équipements, correspondant à une recherche d'un contenu C et à une préparation de la livraison pour ingestion dans le premier réseau de distribution 31. L'entité cliente 10 transmet un message N1 de requête de livraison du contenu C à destination du premier réseau de distribution 31. Le premier serveur 21 est en charge du traitement de cette requête de livraison. On se place par la suite dans le cas où ce contenu C n'est pas disponible dans les premier 31 et deuxième 32 réseaux de distribution mais est disponible dans le troisième réseau de distribution 33. Le premier serveur 21 transmet alors une demande d'ingestion du contenu C au deuxième serveur 22 par l'intermédiaire de l'équipement d'appairage 41 sous la forme d'un message N2. Ce message N2 est reçu par le deuxième serveur 22 à l'étape E20. A l'étape E21, le deuxième serveur 22 détecte que le contenu C n'est pas disponible et transmet à l'étape E22 un message N3 de requête de fourniture du contenu C au troisième réseau de distribution 33, avec délégation par le deuxième réseau de distribution en vue de fournir ou transférer le contenu C au premier réseau de distribution 31. Le message N3 est reçu par le troisième serveur 23 à l'étape E20. A l'étape E21, le troisième serveur 23 détermine que le contenu C est disponible. Le troisième serveur 23 détermine alors aux étapes E23 et E24 un chemin optimal P pour fournir le contenu au premier réseau de distribution 31 puis au cours de l'étape E25 envoie au deuxième serveur 22 un message N4 comprenant un accord de fourniture du contenu C. Ce message N4 est reçu par le deuxième serveur 22 au cours de l'étape E40 et est transféré sous la forme d'un message N5 vers le premier serveur 21 au cours de l'étape E42. Le message N4 est reçu par le premier serveur 21 au cours de l'étape E40. Le premier serveur 21 étant le requérant le contenu C, la phase 2 se termine.

Une troisième phase, notée Phase 3 sur la figure 3, correspond à la phase de transfert ou livraison du contenu C au premier serveur 21 du premier réseau de distribution 31, c'est-à-dire la phase d'ingestion du contenu C dans le premier réseau de distribution. Cette livraison s'effectue au moyen du chemin P déterminé précédemment au cours de la deuxième phase. Il est ici rappelé que le chemin P n'emprunte pas obligatoirement le chemin suivi par la requête de fourniture du contenu. A titre d'exemple illustratif, l'équipement d'appairage 41 est congestionné et les coûts d'interconnexion entre les deuxième 32 et quatrième 34 réseaux de distribution sont élevés. Le chemin P déterminé passe dans cet exemple par le quatrième réseau de distribution 34 pour atteindre le premier réseau de distribution 31. Une fois le contenu C ingéré, ce dernier peut être livré à l'entité cliente 10, par l'intermédiaire d'un serveur de livraison de contenus le cas échéant.

Il est ici souligné que cet exemple particulier prévoit la transmission par une entité cliente d'une requête de livraison du contenu C. Aucune limitation n'est attachée à ce mode de déclenchement de la deuxième phase. Il est notamment possible de prévoir qu'un réseau de distribution demande l'ingestion d'un contenu particulier en fonction de critères qui lui sont propres. A titre d'exemple non limitatif, le réseau de distribution peut notamment demander l'ingestion d'un contenu populaire.

Un dispositif d'interfaçage 20, destiné à être intégré dans le premier réseau de distribution de contenus numériques, est représenté sur la figure 4. Le dispositif d'interfaçage est agencé pour s'interfacer avec au moins un autre dispositif d'interfaçage d'un autre réseau de distribution de contenus. Dans un mode de réalisation particulier, le dispositif d'interfaçage est intégré dans le premier serveur du premier réseau de distribution de contenus.

Ce dispositif d'interfaçage 20 comprend notamment :
- la table 110 décrite précédemment ;
- un module 100 d'émission/réception, agencé pour communiquer avec d'autres dispositifs d'interfaçage, notamment pour recevoir une requête de fourniture d'un contenu émise par un équipement d'un deuxième réseau de distribution de contenus ;
- un module 102 de traitement de requête de fourniture de contenus, agencé pour envoyer une requête de fourniture du contenu à destination d'au moins un troisième réseau de distribution de contenus lorsque le premier réseau de distribution n'est pas apte à répondre à la requête, une délégation par le premier réseau de distribution en vue de fournir ou transférer ledit contenu au deuxième réseau de distribution étant associée à ladite requête.

Dans un mode de réalisation particulier, le dispositif 20 d'interfaçage comprend en outre un module 104 de détermination d'un chemin, agencé pour déterminer un chemin reliant le premier réseau de distribution au deuxième réseau de distribution, le cas échéant par l'intermédiaire d'au moins un quatrième réseau de distribution avec lequel un appairage est établi. Le module 100 d'émission/réception est dans ce cas agencé en outre pour transmettre le contenu à destination du deuxième réseau de distribution sur le chemin, le cas échéant par l'intermédiaire cet ou ces autres quatrièmes réseaux de distribution.

Dans un mode de réalisation particulier, le dispositif d'interfaçage 20 comprend en outre la table de topologie 112 décrite précédemment. Dans ce cas, le module 104 de détermination d'un chemin utilise les informations de la table de topologie 112 pour déterminer un chemin.

Les modules 102, 104 sont agencés pour mettre en oeuvre le procédé précédemment décrit. Il s'agit de préférence de modules logiciels comprenant des instructions logicielles pour faire exécuter les étapes du procédé précédemment décrit, mises en oeuvre par le dispositif d'interfaçage. L'invention concerne donc aussi :
- un programme pour un dispositif d'interfaçage, comprenant des instructions de code de programme destinées à commander l'exécution des étapes du procédé précédemment décrit, lorsque ledit programme est exécuté par ledit dispositif ;
- un support d'enregistrement lisible par un dispositif d'interfaçage sur lequel est enregistré le programme pour un dispositif d'interfaçage.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système de distribution de contenus comprenant au moins deux dispositifs d'interfaçage tels que décrits précédemment, chacun des dispositifs d'interfaçage appartenant à un réseau de distribution de contenus.

La description a été faite pour un réseau de distribution d'un système autonome. Il peut également s'agir d'un réseau de distribution associé à un réseau d'accès particulier. En effet, un opérateur de réseau peut déployer par exemple un réseau de distribution associé à des accès fixes et un autre réseau de distribution associé à des accès par l'intermédiaire de réseaux de communication mobiles. La description est aisément transposable à ce type d'architecture de réseaux de distribution de contenus.

Cette interconnexion de réseau de distribution de contenus peut être réalisée par le biais d'interfaces spécifiques dédiées à l'échange de données relatives aux réseaux de distribution de contenus, telles que l'acheminement des requêtes de fourniture de contenu, la gestion des contenus, l'édition de rapports de livraison entre réseaux pour la livraison de contenus vers des entités clientes, ou bien encore sous la forme d'une plateforme de médiation permettant la fédération de réseaux de distribution de contenus et l'échange de ces mêmes données sans interfaces dédiées à l'interconnexion. La plateforme de médiation centralise les informations relatives aux réseaux de distribution et est alors en charge du dialogue avec les différents réseaux de distribution. A ce titre, la plateforme de médiation comprend un dispositif d'interfaçage 20 tel que décrit précédemment. Les échanges relatifs aux requêtes de fourniture transitent alors par la plateforme de médiation, La livraison effective du contenu entre les réseaux de distribution peut toutefois intervenir dans ce mode de réalisation directement entre les réseaux de distribution de la manière détaillée précédemment.

Le procédé est également applicable à des réseaux de distribution dans lesquels les entités clientes jouent elles-mêmes le rôle de serveurs dans le réseau de distribution. La livraison du contenu peut notamment dans ce cas faire intervenir une telle entité cliente en tant que point d'entrée du réseau de distribution ou bien encore en tant qu'entité relais dans le réseau de distribution pour la livraison du contenu.

## Revendications

1. Procédé de communication mis en oeuvre par un dispositif d'interfaçage (20) d'un serveur (22) d'un premier réseau de distribution de contenus numériques (32), ledit procédé comprenant les étapes suivantes :
- une étape de réception (E20) d'une demande d'ingestion d'un contenu émise par un équipement d'un deuxième réseau de distribution de contenus (31, 33, 34), en vue d'une première mémorisation du contenu dans le deuxième réseau de distribution ;
- lorsque ledit premier réseau de distribution n'est pas apte à répondre à la demande, une étape de d'envoi (E22) d'une requête à destination d'au moins un troisième réseau de distribution de contenus, requérant une ingestion du contenu par le deuxième réseau de distribution, le premier réseau de distribution délégant ladite ingestion dudit contenu.

2. Procédé selon la revendication 1, dans lequel la demande d'ingestion émise par l'équipement du deuxième réseau de distribution est reçue par l'intermédiaire d'au moins un quatrième réseau de distribution, sous la forme d'une requête avec délégation.

3. Procédé selon la revendication 1, comprenant en outre :
- une étape de réception (E40) d'un accord de transfert du contenu en provenance du troisième réseau de distribution ;
- une étape d'envoi (E42) dudit accord à destination du deuxième réseau de distribution.

4. Procédé selon la revendication 1, comprenant en outre, lorsque ledit premier réseau de distribution est apte à répondre à la demande :
- une étape de détermination (E23-E24) d'un chemin reliant le premier réseau de distribution au deuxième réseau de distribution, le cas échéant par l'intermédiaire d'au moins un quatrième réseau de distribution avec lequel un appairage est établi ;
- une étape d'envoi (E31) du contenu à destination du deuxième réseau de distribution sur ledit chemin, le cas échéant par l'intermédiaire dudit au moins un quatrième réseau de distribution.

5. Procédé selon la revendication 4, comprenant en outre une étape de réception (E10) d'informations relatives audit au moins un quatrième réseau de distribution et dans lequel lesdites informations sont prises en compte pour déterminer un chemin.

6. Procédé selon la revendication 1, comprenant en outre :
- une étape de réception (E30) dudit contenu et du chemin associé en provenance du troisième réseau de distribution et à destination du deuxième réseau de distribution ;
- une étape d'envoi (E31) du contenu à destination du deuxième réseau de distribution sur ledit chemin par l'intermédiaire d'un des réseaux de distribution situé sur ledit chemin et avec lequel un appairage est établi.

7. Dispositif (20) d'interfaçage destiné à être intégré dans un premier réseau de distribution de contenus numériques, agencé pour s'interfacer avec au moins un deuxième dispositif d'interfaçage d'un deuxième réseau de distribution de contenus, ledit dispositif comprenant :
- des moyens de réception (100), agencés pour recevoir une demande d'ingestion d'un contenu émise par un équipement d'un deuxième réseau de distribution de contenus (31, 33, 34) en vue d'une première mémorisation du contenu dans le deuxième réseau de distribution ;
- des moyens d'envoi (102), agencés pour envoyer une requête à destination d'au moins un troisième réseau de distribution de contenus lorsque ledit premier réseau de distribution n'est pas apte à répondre à la demande, requérant une ingestion du contenu par le deuxième réseau de distribution, le premier réseau de distribution délégant ladite ingestion dudit contenu.

8. Dispositif d'interfaçage selon la revendication 7, comprenant en outre :
- des moyens de détermination (104) d'un chemin, agencés pour déterminer un chemin reliant le premier réseau de distribution au deuxième réseau de distribution, le cas échéant par l'intermédiaire d'au moins un quatrième réseau de distribution avec lequel un appairage est établi ;
- des moyens d'envoi (100) du contenu à destination du deuxième réseau de distribution sur ledit chemin, le cas échéant par l'intermédiaire dudit au moins un quatrième réseau de distribution.

9. Serveur d'un réseau de distribution de contenus comprenant au moins un dispositif d'interfaçage selon la revendication 7.

10. Système de distribution de contenus comprenant au moins deux dispositifs d'interfaçage selon la revendication 7 appartenant respectivement à deux réseaux de distribution de contenus numériques.

11. Programme pour un dispositif d'interfaçage d'un réseau de distribution de contenus, comprenant des instructions de code de programme destinées à commander l'exécution des étapes du procédé selon l'une des revendications 1 à 6, lorsque ledit programme est exécuté par ledit dispositif.

12. Support d'enregistrement lisible par un dispositif d'interface d'un réseau de distribution de contenus sur lequel est enregistré le programme selon la revendication 11.

## Patentansprüche

1. Kommunikationsverfahren, das von einer Schnittstellenvorrichtung (20) eines Servers (22) eines ersten Netzwerks zur Verteilung digitaler Inhalte (32) eingesetzt wird, wobei das Verfahren die folgenden Schritte umfasst:
- einen Schritt (E20) des Empfangs einer Anfrage nach Aufnahme eines Inhalts, der von einer Ausrüstung eines zweiten Netzwerks zur Verteilung von Inhalten (31, 33, 34) im Hinblick auf eine erste Speicherung des Inhalts in dem zweiten Verteilungsnetzwerk gesandt wird;
- wenn das erste Verteilungsnetzwerk nicht geeignet ist, der Anfrage nachzukommen, einen Schritt des Sendens (E22) einer Anfrage in Richtung mindestens eines dritten Netzwerks zur Verteilung von Inhalten, die eine Aufnahme des Inhalts durch das zweite Verteilungsnetzwerk beantragt, wobei das erste Verteilungsnetzwerk die Aufnahme des Inhalts überträgt.

2. Verfahren nach Anspruch 1, bei dem die Aufnahmeanfrage, die von der Ausrüstung des zweiten Verteilungsnetzwerks gesandt wird, über mindestens ein viertes Verteilungsnetzwerk in Form einer Anfrage mit Übertragung empfangen wird.

3. Verfahren nach Anspruch 1, ferner umfassend:
- einen Schritt des Empfangs (E40) einer Zustimmung zum Transfer des Inhalts, der von dem dritten Verteilungsnetzwerk stammt;
- einen Schritt des Sendens (E42) der Zustimmung in Richtung des zweiten Verteilungsnetzwerks.

4. Verfahren nach Anspruch 1, ferner umfassend, wenn das erste Verteilungsnetzwerk geeignet ist, der Anfrage nachzukommen:
- einen Schritt der Bestimmung (E23-E24) eines Weges, der das erste Verteilungsnetzwerk mit dem zweiten Verteilungsnetzwerk verbindet, gegebenenfalls über mindestens ein viertes Verteilungsnetzwerk, mit dem eine Kopplung hergestellt ist;
- einen Schritt des Sendens (E31) des Inhalts in Richtung des zweiten Verteilungsnetzwerks auf dem Weg, gegebenenfalls über das mindestens eine vierte Verteilungsnetzwerk.

5. Verfahren nach Anspruch 4, ferner umfassend einen Schritt des Empfangs (E10) von Informationen zu dem mindestens einen vierten Verteilungsnetzwerk, und bei dem die Informationen berücksichtigt werden, um einen Weg zu bestimmen.

6. Verfahren nach Anspruch 1, ferner umfassend:
- einen Schritt des Empfangs (E30) des Inhalts und des zugehörigen Weges von dem dritten Verteilungsnetzwerk und in Richtung des zweiten Verteilungsnetzwerks;
- einen Schritt des Sendens (E31) des Inhalts in Richtung des zweiten Verteilungsnetzwerks auf dem Weg über eines der Verteilungsnetze, das sich auf dem Weg befindet und mit dem eine Kopplung hergestellt ist.

7. Schnittstellenvorrichtung (20), die dazu bestimmt ist, in ein erstes Netzwerk zur Verteilung digitaler Inhalte integriert zu sein, die dazu vorgesehen ist, eine Schnittstelle mit mindestens einer zweiten Schnittstellenvorrichtung eines zweiten Netzwerks zur Verteilung von Inhalten zu bilden, wobei die Vorrichtung umfasst:
- Empfangsmittel (100), die dazu vorgesehen sind, eine Anfrage nach Aufnahme eines von einer Ausrüstung eines zweiten Netzwerks zur Verteilung von Inhalten (31, 33, 34) im Hinblick auf eine erste Speicherung des Inhalts in dem zweiten Verteilungsnetzwerk zu empfangen;
- Sendemittel (102), die dazu vorgesehen sind, eine Anfrage in Richtung mindestens eines dritten Netzwerks zur Verteilung von Inhalten zu senden, wenn das erste Verteilungsnetzwerk nicht geeignet ist, der Anfrage nachzukommen, die eine Aufnahme des Inhalts durch das zweite Verteilungsnetzwerk beantragt, wobei das erste Verteilungsnetzwerk die Aufnahme des Inhalts überträgt.

8. Schnittstellenvorrichtung nach Anspruch 7, ferner umfassend:
- Mittel zur Bestimmung (104) eines Weges, die dazu vorgesehen sind, einen Weg zu bestimmen, der das erste Verteilungsnetzwerk mit dem zweiten Verteilungsnetzwerk verbindet, gegebenenfalls über mindestens ein viertes Verteilungsnetzwerk, mit dem eine Kopplung hergestellt ist;
- Mittel zum Senden (100) des Inhalts in Richtung des zweiten Verteilungsnetzwerks auf dem Weg, gegebenenfalls über das mindestens eine vierte Verteilungsnetzwerk.

9. Server eines Netzwerks zur Verteilung von Inhalten, umfassend mindestens eine Schnittstellenvorrichtung nach Anspruch 7.

10. System zur Verteilung von Inhalten, umfassend mindestens zwei Schnittstellenvorrichtungen nach Anspruch 7, die jeweils zwei Netzwerken zur Verteilung digitaler Inhalte angehören.

11. Programm für eine Schnittstellenvorrichtung eines Netzwerks zur Verteilung von Inhalten, umfassend Programmcodeanweisungen, die dazu bestimmt sind, die Ausführung der Schritte des Verfahrens nach einem der Ansprüche 1 bis 6 zu steuern, wenn das Programm von der Vorrichtung ausgeführt wird.

12. Aufzeichnungsträger, der von einer Schnittstellenvorrichtung eines Netzwerks zur Verteilung von Inhalten lesbar ist, auf dem das Programm nach Anspruch 11 aufgezeichnet ist.

## Claims

1. Method of communication implemented by an interfacing device (20) of a server (22) of a first network for distributing digital contents (32), said method comprising the following steps:
- a step of receiving (E20) a content ingestion request transmitted by a device of a second content distribution network (31, 33, 34), with a view to a first storing of the content in the second distribution network;
- if said first distribution network is not able to respond to the request, a step of dispatching (E22) a request to at least one third content distribution network, requesting an ingestion of the content by the second distribution network, the first distribution network delegating said ingestion of said content.

2. Method according to Claim 1, in which the ingestion request transmitted by the device of the second distribution network is received via at least one fourth distribution network in the form of a request with delegation.

3. Method according to Claim 1, furthermore comprising:
- a step of receiving (E40) an agreement to transfer the content from the third distribution network;
- a step of dispatching (E42) said agreement to the second distribution network.

4. Method according to Claim 1, furthermore comprising, if said first distribution network is able to respond to the request:
- a step of determining (E23-E24) a path linking the first distribution network to the second distribution network, if appropriate via at least one fourth distribution network with which a peering is established;
- a step of dispatching (E31) content to the second distribution network on said path, if appropriate via said at least one fourth distribution network.

5. Method according to Claim 4, furthermore comprising a step of receiving (E10) information relating to said at least one fourth distribution network and in which said information is taken into account in order to determine a path.

6. Method according to Claim 1, furthermore comprising:
- a step of receiving (E30) said content and the associated path from the third distribution network and to the second distribution network;
- a step of dispatching (E31) the content to the second distribution network on said path via one of the distribution networks located on said path and with which a peering is established.

7. Interfacing device (20) intended to be integrated into a first digital content distribution network, configured to interface with at least one second interfacing device of a second content distribution network, said device comprising:
- reception means (100), configured to receive a content ingestion request transmitted by a device of a second content distribution network (31, 33, 34) with a view to a first storing of the content in the second distribution network;
- dispatching means (102), configured to dispatch a request to at least one third content distribution network if said first distribution network is not able to respond to the request, requesting an ingestion of the content by the second distribution network, the first distribution network delegating said ingestion of said content.

8. Interfacing device according to Claim 7, furthermore comprising:
- means for determining (104) a path, configured to determine a path linking the first distribution network to the second distribution network, if appropriate via at least one fourth distribution network with which a peering is established;
- means for dispatching (100) the content to the second distribution network on said path, if appropriate via said at least one fourth distribution network.

9. Server of a content distribution network comprising at least one interfacing device according to Claim 7.

10. Content distribution system comprising at least two interfacing devices according to Claim 7, belonging respectively to two digital content distribution networks.

11. Program for an interfacing device of a content distribution network, comprising program code instructions intended to control the performance of the steps of the method according to one of Claims 1 to 6, if said program is executed by said device.

12. Recording medium readable by an interface device of a content distribution network on which the program according to Claim 11 is recorded.
